# EUROPEAN PATENT APPLICATION

(11) **EP 4 648 119 A1**
(43) Date of publication of application: **12.11.2025**
(21) Application number: 25171840.9
(22) Date of filing: 23.04.2025
(51) Int. Cl.: H01M 4/13, H01M 4/04, H01M 10/0525, H01M 4/02, H01M 4/139

(54) **ELECTRODE FOR RECHARGEABLE BATTERY AND ELECTRODE ASSEMBLY INCLUDING THE SAME**

(30) Priority: 25.04.2024 KR 20240055656
(71) Applicant: SAMSUNG SDI CO., LTD., Yongin-si, Gyeonggi-do 17084 (KR)
(72) Inventor: JUNG, Injoe, 17084 Yongin-si, Gyeonggi-do (KR)
(74) Representative: Michalski Hüttermann & Partner Patentanwälte mbB

(57) **Abstract**

An electrode for a rechargeable battery according to one or more embodiments of the present disclosure includes: a substrate; and an active material layer that is formed on the substrate, includes a plurality of holes, and includes a first density portion and a second density portion. The first density portion has a higher density than that of the second density portion, the second density portion has a lower density than that of the first density portion, and the second density portion is disposed at both sides (e.g., opposite sides) of the first density portion.

## Description

### BACKGROUND

### 1. Field

The present disclosure relates to an electrode for a battery, and for example, to an electrode for a rechargeable battery and an electrode assembly including the same.

### 2. Description of the Related Art

The demand for rechargeable batteries is rising due to advancements in technology and the growing need or desire for mobile devices.

A rechargeable battery may be formed by creating an electrode assembly in one of two ways: by placing electrodes on both surfaces (e.g., opposite surfaces) of a separator and winding them into a shape of a jelly roll; or by stacking an electrode with a sheet shape (e.g., a sheet-shaped electrode) and a separator together. The electrode assembly may then be put into a case with an electrolyte, and the case opening (e.g., an opening of the case) is then sealed with a cap assembly.

Each of positive and negative electrodes of the rechargeable battery includes an active material capable of intercalation and deintercalation of a lithium ion. A transition metal compound, such as lithium cobalt oxide, lithium nickel oxide, lithium manganese oxide, and/or the like, may be used as an active material of the positive electrode. For the negative electrode, a carbon-based active material (such as crystalline carbon and/or amorphous carbon) and/or a silicon-based active material may be (e.g., may be mainly) used .

As the capacity of the rechargeable battery increases, the size (e.g., unit sizes) of electrode plates of the rechargeable battery also increases, making the wetting of the electrolyte more important.

If the wetting (or impregnation) of the electrolyte is incomplete during the manufacturing process (e.g., in a process of manufacturing the rechargeable battery), a capacity of the rechargeable battery may be degraded, and the uniformity of the electrode state (e.g., a state of the electrode) may worsen, leading to localized electrode reactions (e.g., a reaction of the electrode is locally concentrated). This may cause lithium metal to precipitate locally (e.g., at a position where the electrode reaction is locally concentrated), posing a safety risk (e.g., a problem in safety of the battery).

As the size of the electrode plate increases, a time desired or required for wetting of the electrolyte also relatively increases, which may degrade the productivity of the rechargeable battery. Poor wetting of the electrolyte may also accelerate electrode degradation (e.g., degradation of the electrode), shortening the battery's lifespan even if other aspects or states of electrode are in good or suitable conditions..

The above-described information disclosed in the technology that is the background of this disclosure is only for improving understanding of the background of the present disclosure, and thus may include the information that does not constitute the prior art.

### SUMMARY

Aspects of one or more embodiment of the present disclosure are directed toward an electrode capable of increasing an impregnation speed of an electrolyte while maintaining substantially uniform impregnation even if a size of the electrode of a rechargeable battery increases. That is, the electrode is designed to increase the impregnation speed of the electrolyte while maintaining substantially uniform impregnation, even as the size of the electrode in the rechargeable battery increases. Aspects of one or more embodiments of the present disclosure are directed toward a rechargeable battery including the electrode. Additional aspects will be set forth in part in the description which follows and, in part, will be apparent from the description, or may be learned by practice of the presented embodiments of the disclosure.

An electrode for a rechargeable battery according to one or more embodiments of the present disclosure includes: a substrate; and an active material layer that is formed on the substrate, includes a plurality of holes, and includes a first density portion and a second density portion. The first density portion has a higher density than that of the second density portion, the second density portion has a lower density than that of the first density portion, and the second density portion is arranged at both sides (e.g., opposite sides) of the first density portion.

A width of the first density portion may be about 10% to about 90% of a width of the substrate.

A hole density of the second density portion may be about 50 pt/mm² to about 400 pt/mm², and a hole density of the first density portion may be about 100 pt/mm² to about 500 pt/mm².

A depth of the hole of each of the first density portion and the second density portion may be about 5% to about 100% of a thickness of the active material layer.

An interval between holes of the second density portion may be about 50 µm to about 145 µm, and an interval between holes of the first density portion may be about 40 µm to about 100 µm.

A diameter of a hole of the first density portion may be about 20 µm to about 70 µm, and a diameter of a hole of the second density portion may be 20 µm to 70 µm.

The substrate may be formed of copper, and the active material layer may be formed of a negative electrode active material.

An area percent of the first density portion : an area percent of the second density portion may be about 25% to about 75% : about 75% to about 25%.

An electrode assembly according to one or more embodiments of the present disclosure includes: a negative electrode that includes the electrode; a positive electrode that overlaps the negative electrode; and a separator that is arranged between the negative electrode and the positive electrode. An electrode uncoated portion of the negative electrode or the positive electrode may be arranged adjacent to the second density portion.

According to one or more embodiments of the present disclosure, holes may be formed to have different hole densities so that an impregnation property in a central portion of an electrode with a poor impregnation property is increased. Thus, an impregnation time may be shortened.

According to one or more embodiments of the present disclosure, the holes may be densely formed in a portion with the poor impregnation property and the holes may be sparsely formed in a portion with a good or suitable impregnation property so that substantially uniform impregnation is achieved throughout an electrode assembly.

According to one or more embodiments of the present disclosure, the holes are preferably circular holes.

The holes may be arranged with a certain repeating pattern. According to one or more embodiments of the present disclosure, the holes in the first density portion are uniformly distributed. Additionally or alternatively, the holes in the second density portion may be uniformly distributed.

According to one or more embodiments of the present disclosure the holes are distributed in a hexagonal pattern. Preferably, the holes form a pattern of the plane symmetry group (wallpaper group) p6m.

According to one or more embodiments of the present disclosure, a high power and fast charging characteristic may be secured by improving ion mobility together with the impregnation property.

According to one or more embodiments of the present disclosure, a lithium (Li) precipitation phenomenon due to an increase in a reaction area on a surface of an active material layer due to the holes may be reduced, and a fast charging life may be improved.

Aspects of one or more embodiments of the present disclosure are toward forming holes with varying densities in an electrode to enhance electrolyte impregnation, particularly in areas with poor impregnation properties, thereby reducing impregnation time. Densely packed holes in poorly impregnated areas and sparsely packed holes in well-impregnated areas ensure uniform impregnation across the electrode. This approach improves ion mobility, leading to high power and fast charging capabilities. Additionally, it reduces lithium precipitation on the active material layer's surface, enhancing the fast-charging lifespan.

### BRIEF DESCRIPTION OF THE DRAWINGS

The drawings attached to the present specification illustrate embodiments of the present disclosure and serve to further understand a technical idea of the present disclosure together with a detailed description of the present disclosure to be described in more detail later, so that the present disclosure should not be construed as being limited to a matter described in the drawings.
FIG. 1 is a plan view of an electrode included in a rechargeable battery according to one or more embodiments of the present disclosure.
FIG. 2 is a cross-sectional view taken (e.g., cut) along the line II-II' of FIG. 1.
FIG. 3 is a plan view of an electrode included in a rechargeable battery according to one or more embodiments of the present disclosure.
FIGS. 4 to 7 are schematic diagrams showing lithium rechargeable batteries according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Herein, embodiments of the present disclosure will be described in more detail with reference to the attached drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. A term or a word used in the present specification and claims should not be construed as limited to its usual or dictionary meaning, and should be interpreted as a meaning and a concept conforming to a technical idea of the present disclosure based on a principle that an inventor may properly define a concept of the term to describe his or her invention in the best way. Thus, one or more embodiments described in the present specification and a configuration shown in the drawings are only examples of the present disclosure and do not represent all of the technical idea(s) of the present disclosure, so that it should be appreciated that there may be one or more suitable equivalents and variations that may replace one or more embodiments and the configuration at a time at which the present application is filed. Also, a person of ordinary skill in the art, in view of the present disclosure in its entirety, would appreciate that each suitable feature of the various embodiments of the present disclosure may be combined with each other, partially or entirely, and may be technically interlocked and operated in various suitable ways, and each embodiment may be implemented independently of each other or in conjunction with each other in any suitable manner unless otherwise stated or implied.

A term "comprises", "includes", "comprising", or "including" if (e.g., when) used in the present specification, specifies presence of a shape, a number, a step (e.g., act or task), an operation, a member, an element, and/or a group thereof, but does not preclude presence or addition of one or more other shape, one or more other number, one or more other operation, one or more other member, one or more other element, and/or a group thereof.

Additionally, to help with the understanding of the present disclosure, the attached drawings may not be shown at an actual scale, and dimensions of some components may be exaggerated in the drawings. In addition, the same reference number may be assigned to the same component in different embodiments.

Although terms "first", "second", and/or the like are used to describe one or more suitable components, the components are not limited by the terms. The terms are only used to distinguish one component from another component, and unless otherwise stated, the first component may be the second component.

As used herein, the singular forms "a," "an" and "the" are intended to include the plural forms as well, unless the context clearly indicates otherwise. Throughout the specification, unless otherwise stated, each component may be singular or plural.

Spatially relative terms such as "beneath", "below", "lower", "above", "upper", and/or the like may be used herein for ease of description to describe a relationship between one element or feature to another element(s) or feature(s) as shown in the drawings. It will be understood that the spatially relative terms are intended to encompass different directions of a device in use or operation in addition to a direction depicted in the drawings. For example, if a device shown in the drawings is turned over, an element described as "below" or "beneath" another element may be understood to be "above" the other element. Thus, the term "below" may encompass directions of both (e.g., simultaneously) above and below.

It will be understood that when an element, such as an area, layer, film, region or portion, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present. In contrast, when an element or layer is referred to as being "directly on," "directly connected to", "directly coupled to", or "immediately adjacent to" another element or layer, there are no intervening elements or layers present.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

The terms used in the present specification are intended to describe one or more embodiments of the present disclosure, and are not intended to limit the present disclosure.

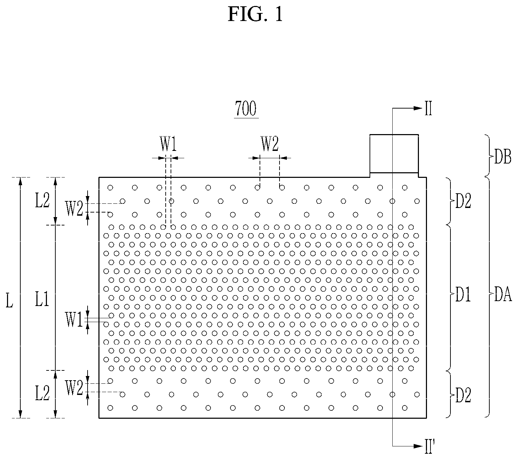

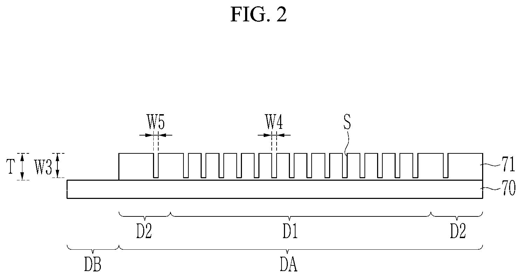

FIG. 1 is a plan view of an electrode included in a rechargeable battery according to one or more embodiments of the present disclosure, and FIG. 2 is a cross-sectional view taken (e.g., cut) along the line II-II' of FIG. 1.

As shown in FIG. 1 and FIG. 2, the electrode 700 according to one or more embodiments of the present disclosure may include a substrate 70 and an active material layer 71 formed on one surface of the substrate 70. The electrode is described as a sheet-type (kind) electrode included in a stacking type (kind) electrode assembly of the rechargeable battery described in more detail later, but the present disclosure is not limited thereto, and the electrode may also be used as an electrode of a winding type (kind) electrode assembly (see FIG. 2).

The substrate 70 may include an electrode active portion DA and an electrode uncoated portion DB. The active material layer 71 may be formed at or on the electrode active portion DA, while the electrode uncoated portion DB may protrude (e.g., may have a shape protruding) from the electrode active portion in order to draw an electric current to the outside.

Holes S may be formed in the active material layer 71, with varying densities (e.g., the holes may be formed with different densities).

The active material layer 71 may include a first density portion D1 where the holes S are relatively densely formed, and a second density portion D2 where the holes S are relatively sparsely formed.

A hole density of the first density portion D1 may be about 100 pt/mm² (points per square millimeter) to about 500 pt/mm², and a hole density of the second density portion D2 may be about 50 pt/mm² to about 400 pt/mm². In one or more embodiments, an interval W1 between the holes S of the first density portion D1 may be about 40 µm to about 100 µm, and an interval W2 between the holes of the second density portion may be about 50 µm to about 145 µm. The density refers to the number of holes (e.g., points) per unit area (e.g., square millimeter).

The second density portion D2 may be respectively arranged at both sides (e.g., opposite sides) of the first density portion D1. The second density portion D2 may be arranged adjacent to the electrode uncoated portion DB.

A width L2 of the second density portion D2 may be smaller than a width L1 of the first density portion D1, and the width L1 of the first density portion D1 may be about 10% to about 90% of a total width L of the electrode.

A thickness (T) of the electrode may be about 50 µm to about 200 µm, a depth W3 of the hole S may be about 5% to about 100% of a thickness T of the active material layer, a diameter W4 of the hole S in the first density portion D1 may be about 20 µm to about 70 µm, and a diameter W5 of the hole S in the second density portion D2 may be about 20 µm to about 70 µm. Also, in the present disclosure, "diameter" refers to the circle diameter for circular holes, and to the major axis length for non-circular holes.

As described above, in one or more embodiments of the present disclosure, the holes may be formed in the active material layer, and the hole density of a central portion of the active material layer may differ from the hole density of an edge of the active material layer, so that an impregnation property of the electrode assembly is improved.

The holes may be densely arranged at a central portion of the electrode, where the impregnation property is poor (e.g., with a poor impregnation property), to enhance the impregnation property (e.g., to increase impregnation). Conversely, the holes may be sparsely arranged at an edge of the electrode, where the impregnation property is good (e.g., with a good or suitable impregnation property), to achieve substantially uniform impregnation throughout the electrode.

Improving the impregnation property of the central portion may shorten the overall impregnation time, thereby enhancing the productivity of the rechargeable battery.

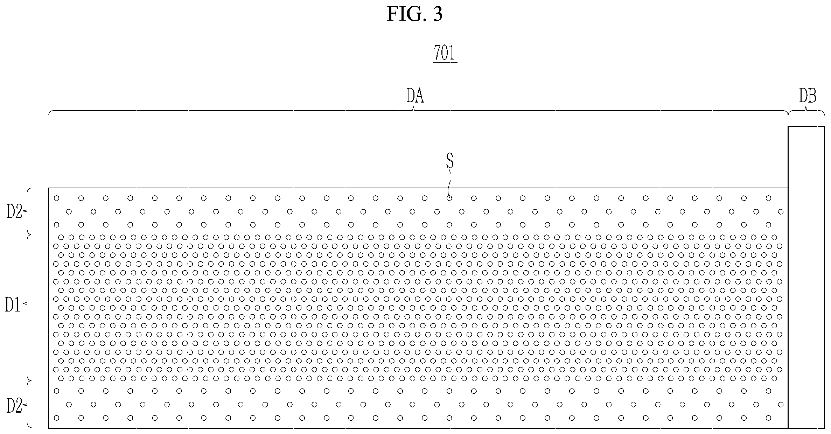

FIG. 3 is a plan view of an electrode included in a rechargeable battery according to one or more embodiments of the present disclosure.

As shown in FIG. 3, the electrode 701 (according to the one or more embodiments of the present disclosure) may include a band-shaped substrate with (or having) a long length in one direction and an active material layer formed on the substrate.

The active material layer may extend along (e.g., be formed long in (along)) a length direction of the substrate, and may include a first density portion D1 and a second density portion D2 arranged at both sides (e.g., opposite sides) of the first density portion D1.

The substrate may include an electrode active portion DA, where an active material layer is formed, and an electrode uncoated portion DB extending from the electrode active portion DA.

The electrode 701 of FIG. 3 may have a shape that is repeatedly wound as a winding type or kind, and in the electrode 701, the electrode uncoated portion DB may be arranged at at least one of both (e.g., opposite) ends along the length direction of the substrate. That is, the electrode 701 shown in FIG. 3 may be designed to be repeatedly wound, and the electrode uncoated portion DB may be arranged at at least one of the ends along the length of the substrate. Here, "the ends along the length direction" refers to the two extremities of the substrate when looking at it from its longest side (i.e., the two farthest points on the substrate, at either end of its length).

Table 1 shows data measuring the impregnation time according to the hole density of the electrode.

| | Hole condition | Impregnation time (sec) | Improvement rate (%) |
|---|---|---|---|
| Comparative Example 1 | No holes | 67 sec | - |
| Embodiment 1 | Density: 100 pt/mm² | 42 sec | 37% |
| | Depth: 20 µm | | |
| Embodiment 2 | Density: 500 pt/mm² | 29 sec | 57% |
| | Depth: 20 µm | | |

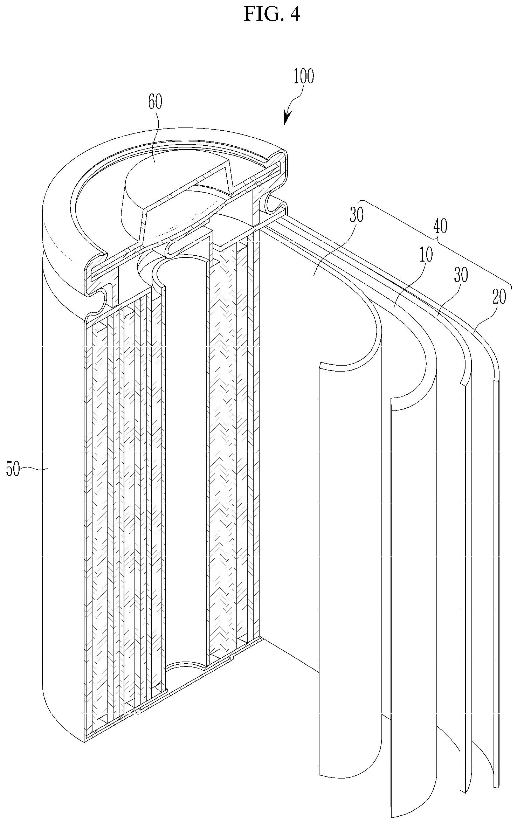

Referring to Table 1, it may be seen that the impregnation time is 67 sec for a rechargeable battery (see FIG. 4) where an electrode does not include holes, as in Comparative Example 1. In contrast, the impregnation times are 42 sec and 29 sec for the rechargeable batteries with holes, as in Embodiment 1 and Embodiment 2, respectively. This represents a reduction in impregnation time by 24% and 40% for Embodiments 1 and 2 compared to Comparative Example 1.

Table 2 shows data measuring an area of a non-impregnation portion and an increase in the thickness according to a hole presence ratio of the electrode.

| | Hole size | Area of second density portion D2 (%): Area of first density portion D1 (%) | Area of non-impregnation portion of central portion of electrode plate (%) (non-impregnation portion/entire electrode plate) | Risk of increas ed thicknes s |
|---|---|---|---|---|
| Comparative Example 1 | No holes | | 10% | 0% |
| Comparative Example 2 | Second density portion D2: 100 pt/mm² | 100%:0% | 3.0% | 0.1% |
| Embodiment 3 | | 75%:25% | 2.2% | 0.2% |
| Embodiment 4 | | 50%:50% | 1.5% | 0.4% |
| Embodiment 5 | First density portion D1: 500 pt/mm² | 25%:75% | 0.8% | 0.5% |
| Comparative Example 3 | | 0%:100% | 0.3% | 1.0% |

Referring to Table 2, it may be seen that the area of the non-impregnation portion in the central portion of the electrode plate for the rechargeable batteries with holes, as in Embodiment 3, Embodiment 4, and Embodiment 5, is reduced from 10% to 0.8% compared to the rechargeable battery (see FIG. 4) without holes (e.g., in which an electrode does not include any hole), as in Comparative Example 1.

It may be seen that the area of the non-impregnation portion in the rechargeable batteries including only one of the density portions (e.g., only one selected from among the first density portion and the second density portion), as in Comparative Example 2 and Comparative Example 3, is reduced compared to Comparative Example 1. However, the area the area of the non-impregnation portion of Comparative Example 2 is larger than that of Embodiment 3.

When the hole is (e.g., holes are) formed, the active material layer around the hole may rise, leading to an increase in the thickness. This may cause an increase in the dropping of the active material, particularly at the edges (particularly, the active material at the edge thereof).

In Comparative Example 3, an increase of 1% or more in the thickness may occur compared with Comparative Example 1. Consequently, the dropping of the active material may increase in Comparative Example 2 compared to Embodiments 3 to 5 so that an energy density thereof is reduced.

As described above, in one or more embodiments of the present disclosure, the hole density in the central portion may be relatively dense (e.g., densely formed), while the hole density at (of) the edge may be relatively sparse (e.g., sparsely formed). Thus, the area of the non-impregnation portion may be minimized or reduced by improving an impregnation property of a portion with poor impregnation. That is, this minimizes or reduces the area of the non-impregnation portion by improving the impregnation property of the poorly impregnated portion.

A hole area ratio at the edge and the central portion may be adjusted, so that a dropping phenomenon of the active material due to an increase in a thickness of the active material layer due to formation of the hole is reduced. Thus, a decrease in an energy density thereof may be prevented or reduced. That is, by adjusting the hole area ratio at the edge and the central portion, the dropping phenomenon of the active material due to the increased thickness of the active material layer from hole formation can be reduced. This helps prevent or reduce a decrease in energy density. Here, the "dropping phenomenon" refers to the detachment or loss of active material from the electrode. This can happen when the active material layer around the holes rises, leading to an increase in thickness. As a result, the material, especially at the edges, may become loose and fall off, which can negatively impact the performance and energy density of the battery.

### Positive electrode active material

A compound (i.e., a lithiated intercalation compound) capable of reversible intercalation and deintercalation of lithium may be used as the positive electrode active material. For example, one or more types (kinds) of composite oxides of a metal selected from among cobalt, manganese, nickel, and/or a (e.g., any suitable) combination thereof and lithium may be used as the positive electrode active material.

The composite oxide may be lithium transition metal composite oxide, and for example, the composite oxide may include lithium nickel-based oxide, lithium cobalt-based oxide, lithium manganese-based oxide, a lithium iron phosphate-based compound, cobalt-free nickel-manganese-based oxide, and/or a (e.g., any suitable) combination thereof.

As an example, a compound expressed by any one selected from among the following chemical formulas may be used as the positive electrode active material. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In the above formulas, A may be Ni, Co, Mn, and/or a (e.g., any suitable) combination thereof; X may be Al, Ni, Co, Mn, Cr, Fe, Mg, Sr, V, a rare earth element, and/or a (e.g., any suitable) combination thereof; D may be O, F, S, P, and/or a (e.g., any suitable) combination thereof; G may be Al, Cr, Mn, Fe, Mg, La, Ce, Sr, V, and/or a (e.g., any suitable) combination thereof; and L¹ may be Mn, Al, and/or a (e.g., any suitable) combination thereof.

For example, the positive electrode active material may be a high-nickel-based positive electrode active material in which a content (e.g., amount) of nickel is about 80 mol% or more, about 85 mol% or more, about 90 mol% or more, about 91 mol% or more, or about 94 mol% or more and about 99 mol% or less based on 100 mol% of a metal excluding lithium in the lithium transition metal composite oxide. The high-nickel-based positive electrode active material may realize a high capacity, so that the high-nickel-based positive electrode active material may be applied to a high-capacity and high-density lithium rechargeable battery.

### Positive electrode

The positive electrode for the lithium rechargeable battery may include a current collector and a positive electrode active material layer formed on the current collector. The positive electrode active material layer may include the positive electrode active material, and may further include a binder and/or a conductive material (e.g., an electron conductor).

For example, the positive electrode may further include an additive that may act as a sacrificial positive electrode.

A content (e.g., amount) of the positive electrode active material may be 90 wt% to 99.5 wt% based on 100 wt% of the positive electrode active material layer, and a content (e.g., amount) of each of the binder and the conductive material may be 0.5 wt% to 5 wt% based on 100 wt% of the positive electrode active material layer.

The binder may serve to attach positive electrode active material particles to each other well, and may serve to attach the positive electrode active material to the current collector. A representative example of the binder may include polyvinyl alcohol, carboxymethylcellulose, hydroxypropylcellulose, diacetylcellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, a (metha)acrylated styrene-butadiene rubber, an epoxy resin, a (metha)acryl resin, a polyester resin, nylon, and/or the like, but the present disclosure is not limited thereto.

The conductive material (e.g., electron conductor) may be used to provide conductivity to the electrode, and the conductive material that does not cause chemical change and is an electronic conductive material may be used in the battery including the conductive material. An example of the conductive material may include a carbon-based material such as natural graphite, artificial graphite, carbon black, acetylene black, ketjen black, a carbon fiber, a carbon nano-fiber, a carbon nanotube, and/or the like; a metal-based material such as a metal powder or a metal fiber containing copper, nickel, aluminum, silver, and/or the like; a conductive polymer such as a polyphenylene derivative and/or the like; and/or a (e.g., any suitable) mixture thereof.

Al may be used as the current collector, but the present disclosure is not limited thereto.

### Negative electrode active material

The negative electrode active material may include a material capable of reversible intercalation and deintercalation of a lithium ion, a lithium metal, an alloy of the lithium metal, a material capable of doping and dedoping lithium, or transition metal oxide.

The material capable of reversible intercalation and deintercalation of the lithium ion may include a carbon-based negative electrode active material (for example, crystalline carbon, amorphous carbon, and/or a (e.g., any suitable) combination thereof). An example of the crystalline carbon may include graphite such as artificial graphite and/or natural graphite having a shape such as an amorphous shape, a plate shape (e.g., in a form of plates), a flake shape (e.g., in a form of flakes), a spherical shape (e.g., in a form of spheres), and/or a fibrous shape (e.g., in a form of fibers), and an example of the amorphous carbon may include soft carbon, hard carbon, mesophase pitch carbide, fired cokes, and/or the like.

An alloy of lithium and a metal selected from among Na, K, Rb, Cs, Fr, Be, Mg, Ca, Sr, Si, Sb, Pb, In, Zn, Ba, Ra, Ge, Al, and Sn may be used as the alloy of the lithium metal.

A Si-based negative electrode active material or a Sn-based negative electrode active material may be used as the material capable of doping and dedoping lithium. The Si-based negative electrode active material may be silicon, a silicon-carbon composite, SiOx (0 < x ≤ 2), a Si-Q alloy (wherein Q is an element selected from among an alkali metal, an alkaline-earth metal, a Group 13 element, a Group 14 element excluding Si, a Group 15 element, a Group 16 element, a transition metal, a rare earth element, and/or a (e.g., any suitable) combination thereof), and/or a (e.g., any suitable) combination thereof. The Sn-based negative electrode active material may be Sn, SnOx (0 < x ≤ 2), e.g., SnO₂, a Sn-based alloy, and/or a (e.g., any suitable) combination thereof.

The silicon-carbon composite may be a composite of silicon and amorphous carbon. According to one or more embodiments, the silicon-carbon composite may have a shape in which the amorphous carbon is coated on a surface of a silicon particle. For example, it may include a secondary particle (i.e., a core) in which (e.g., secondary particles in each of which) silicon primary particles are assembled (e.g., aggregated) and an amorphous carbon coating layer (i.e., a shell) arranged on a surface of the secondary particle. For example, the amorphous carbon may also be arranged between the silicon primary particles, so that the silicon primary particles are coated with the amorphous carbon. The secondary particle may also be dispersed in an amorphous carbon matrix.

The silicon-carbon composite may further include crystalline carbon. For example, the silicon-carbon composite may include a core including the crystalline carbon and a silicon particle and an amorphous carbon coating layer arranged on a surface of the core.

The Si-based negative electrode active material or the Sn-based negative electrode active material may be mixed with a carbon-based negative electrode active material.

### Negative electrode

The negative electrode for the lithium rechargeable battery may include a current collector and a negative electrode active material layer formed on the current collector. The negative electrode active material layer may include the negative electrode active material, and may further include a binder and/or a conductive material.

For example, the negative electrode active material layer may include about 90 wt% to about 99 wt% of the negative electrode active material, about 0.5 wt% to about 5 wt% of the binder, and 0 wt% to about 5 wt% of the conductive material.

The binder may serve to attach negative electrode active material particles to each other well, and may serve to attach the negative electrode active material to the current collector. A non-aqueous binder, an aqueous binder, a dry binder, and/or a (e.g., any suitable) combination thereof may be used as the binder.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (metha)acrylated styrene-butadiene rubber, a (metha)acrylonitrile-butadiene rubber, a (metha)acryl rubber, a butyl rubber, a fluorine rubber, polyethyleneoxide, polyvinylpyrrolidone, polyepichlorohydrin, polyphosphazene, poly(metha)acrylonitrile, an ethylenepropylene-diene copolymer, polyvinylpyridine, chlorosulfonated polyethylene, latex, a polyester resin, a (metha)acryl resin, a phenol resin, an epoxy resin, polyvinylalcohol, and/or a (e.g., any suitable) combination thereof.

If the aqueous binder is used as the binder, it may further include a cellulose-based compound capable of imparting viscosity. The cellulose-based compound may be used by mixing one or more types (kinds) of carboxymethyl cellulose, hydroxypropyl methyl cellulose, methyl cellulose, an alkali metal salt thereof, and/or the like. Na, K, or Li may be used as the alkali metal.

The dry binder may be a polymer material capable of being fiberized, and for example, the dry binder may be polytetrafluoroethylene, polyvinylidene fluoride, a polyvinylidene fluoride-hexafluoropropylene copolymer, polyethyleneoxide, and/or a (e.g., any suitable) combination thereof.

The conductive material (e.g., electron conductor) may be used to provide conductivity to the electrode, and the conductive material that does not cause chemical change and is an electronic conductive material may be used in the battery including the conductive material. An example of the conductive material may include a carbon-based material such as natural graphite, artificial graphite, carbon black, acetylene black, ketjen black, a carbon fiber, a carbon nano-fiber, a carbon nanotube, and/or the like; a metal-based material such as a metal powder or a metal fiber including copper, nickel, aluminum, silver, and/or the like; a conductive polymer such as a polyphenylene derivative and/or the like; and/or a (e.g., any suitable) mixture thereof.

The current collector of the negative electrode current collector may be selected from among a copper foil, a nickel foil, a stainless steel foil, a titanium foil, a nickel foam, a copper foam, a polymer substrate coated with a conductive metal, and/or a (e.g., any suitable) combination thereof.

The negative electrode may be the electrode as shown in FIG. 1 or FIG. 3, and the negative electrode active material layer may include a first density portion and a second density portion having different densities. A density of the first density portion may be about 100 pt/mm² to about 500 pt/mm², and a density of the second density portion may be about 50 pt/mm² to about 400 pt/mm². In this case, an interval between holes of the first density portion may be about 40 µm to about 100 µm, and an interval between holes of the second density portion may be about 50 µm to about 145 µm. The density is the number of holes per unit area.

The second density portion D2 may be respectively arranged at both sides (e.g., opposite sides) of the first density portion D1. A width L2 of the second density portion D2 may be smaller than a width L1 of the first density portion D1, and the width L1 of the first density portion D1 may be about 10% to about 90% of a total width L of the electrode.

An area percent of the first density portion : an area percent of the second density portion may be about 25% to about 75%: about 75% to about 25%.

A thickness (T) of the electrode may be about 50 µm to about 200 µm, a depth W3 of the hole S may be about 5% to about 100% of a thickness T of the active material layer, a diameter of the hole of the first density portion may be about 20 µm to about 70 µm, and a diameter of the hole of the second density portion may be about 20 µm to about 70 µm.

In the above embodiments, the hole is formed in the negative electrode active material layer, but the present disclosure is not limited thereto, and the hole may also be formed in the positive electrode active material layer.

### Electrolyte

The electrolyte for the lithium rechargeable battery may include a non-aqueous organic solvent and a lithium salt.

The non-aqueous organic solvent may serve as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethylacetate, methylpropionate, ethylpropionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. For example, cyclohexanone and/or the like may be used as the ketone-based solvent. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group and includes a double bond, an aromatic ring, or an ether group), amides such as dimethylformamide, dioxolanes such as 1,3-dioxolane or 1,4-dioxolane, sulfolanes, and/or the like.

The non-aqueous organic solvent may be used alone or in combination of two or more types (kinds).

If the carbonate-based solvent is used, a mixture of cyclic carbonate and linear carbonate may be used, and the cyclic carbonate and the linear carbonate may be mixed in a volume ratio of 1:1 to 1:9.

The lithium salt may be a material that is dissolved in an organic solvent, acts as a source of a lithium ion within the battery to enable a basic operation of the lithium rechargeable battery, and promotes a movement of the lithium ion between the positive and negative electrodes. A representative example of the lithium salt may include one or two or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (wherein x and y are integers from 1 to 20), lithium trifluoromethane sulfonate, lithium tetrafluoroethane sulfonate, lithium difluorobis(oxalato)phosphate (LiDFOB), and lithium bis(oxalato)borate (LiBOB).

### Separator

Depending on a type or kind of the lithium rechargeable battery, the separator may exist between the positive and negative electrodes. Polyethylene, polypropylene, polyvinylidene fluoride, or a multilayer film with two or more layers thereof may be used as the separator, and a mixed multilayer film such as a polyethylene/polypropylene two-layer separator, a polyethylene/polypropylene/polyethylene three-layer separator, a polypropylene/polyethylene/polypropylene three-layer separator, and/or the like may be used as the separator.

The separator may include a porous substrate and a coating layer including an organic material, an inorganic material, and/or a (e.g., any suitable) combination thereof arranged on a surface (e.g., one surface or both surfaces (e.g., opposite surfaces)) of the porous substrate.

The porous substrate may be a polymer film formed by any one polymer selected from among polyolefin such as polyethylene or polypropylene, polyester such as polyethyleneterephthalate or polybutyleneterephthalate, polyacetal, polyamide, polyimide, polycarbonate, polyetherketone, polyaryl etherketone, polyetherimide, polyamideimide, polybenzimidazole, polyethersulfone, polyphenyleneoxide, a cyclic olefin copolymer, polyphenylenesulfide, polyethylenenaphthalate, a glass fiber, Teflon (tetrafluoroethylene), and polytetrafluoroethylene, or a copolymer and/or a (e.g., any suitable) mixture of two or more thereof.

The organic material may include a polyvinylidenefluoride-based polymer or a (metha)acryl-based polymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto.

The organic material and the inorganic material may be mixed in one coating layer, or a coating layer including the organic material and a coating layer including the inorganic material may be stacked.

### Lithium rechargeable battery

The lithium rechargeable battery may be classified into a cylindrical type or kind, a prismatic type or kind, a pouch-type or kind, a coin-type or kind, and/or the like depending on a shape thereof.

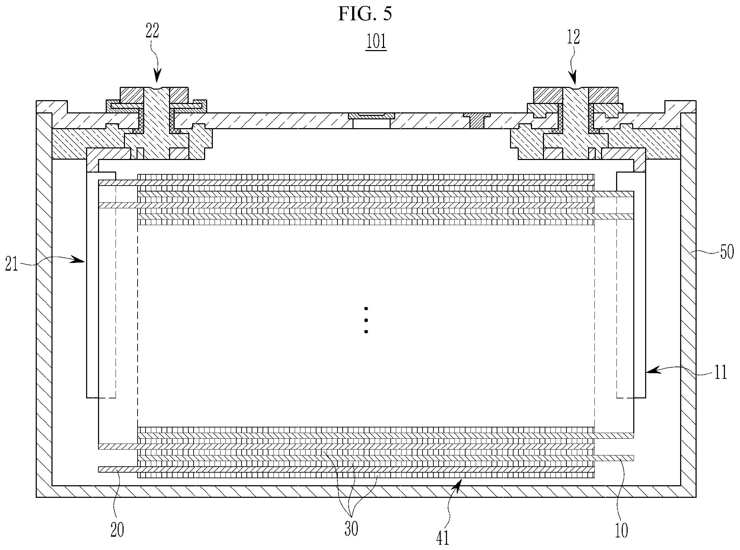

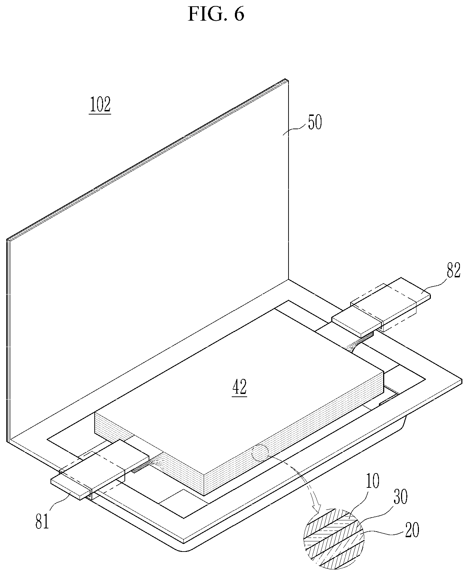

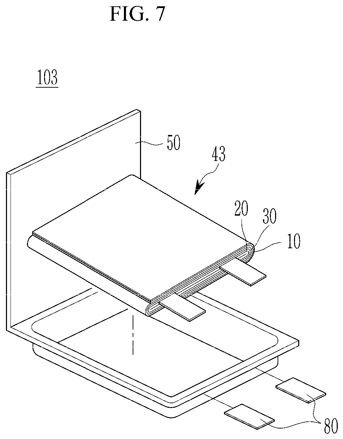

FIGS. 4 to 7 are schematic diagrams showing lithium rechargeable batteries according to one or more embodiments of the present disclosure. FIG. 4 may show a cylindrical type (kind) battery, FIG. 5 may show a prismatic type (kind) battery, and FIG. 6 and FIG. 7 may show pouch-type (kind) batteries.

An electrode assembly shown in FIG. 4, FIG. 5, and FIG. 7 may be a winding type or kind electrode assembly including the electrode 701 shown in FIG. 3 as a negative electrode, and an electrode assembly 42 shown in FIG. 6 may be a stacking type or kind electrode assembly including the electrode 700 shown in FIG. 1 and FIG. 2 as a negative electrode.

Referring to FIG. 4 and FIG. 5, the lithium rechargeable battery 100 or 101 may include an electrode assembly 40 or 41 having a separator 30 interposed between a positive electrode 10 and a negative electrode 20, and a case 50 in which the electrode assembly 40 or 41 is embedded. The positive electrode 10, the negative electrode 20, and the separator 30 may be impregnated with an electrolyte. As shown in FIG. 4, the lithium rechargeable battery 100 may include a sealing member 60 that seals the case 50. The lithium rechargeable battery 101 of FIG. 5 may include a positive electrode lead tab 11, a positive terminal 12, a negative electrode lead tab 21 and a negative terminal 22.

As shown in FIG. 6 and FIG. 7, the lithium rechargeable battery 102 or 103 may include an electrode tab 80 (i.e., a positive electrode tab 81 and a negative electrode tab 82) that serves as an electrical path for guiding an electric current formed in the electrode assembly 42 or 43 to the outside.

The lithium rechargeable battery according to one or more embodiments of the present disclosure may be applied to a vehicle, a mobile phone, and/or one or more suitable types (kinds) of electric devices, and the present disclosure is not limited thereto.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, a device for manufacturing the battery, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

While this disclosure has been described in connection with what is presently considered to be practical embodiments, it is to be understood that the disclosure is not limited to the disclosed embodiments. In contrast, it is intended to cover one or more suitable modifications and equivalent arrangements included within the scope of the appended claims and equivalents thereof.

## Claims

1. An electrode (700, 701) for a rechargeable battery (100, 101, 102, 103), the electrode (700, 701) comprising:
a substrate (70); and
an active material layer (71) that is on the substrate (70),
wherein the active material layer (71) comprises a plurality of holes (S),
wherein the active material layer (71) comprises a first density portion (D1) and a second density portion (D2),
wherein the first density portion (D1) has a higher density of holes (S) than the density of holes (S) of the second density portion (D2), and wherein the second density portion (D2) is located at opposite sides of the first density portion (D1).

2. The electrode (700, 701) according to claim 1, wherein a width (L1) of the first density portion (D1) is 10% to 90% of a width of the substrate (70) or 10% to 90% of a width (L) of the electrode (700, 701).

3. The electrode (700, 701) according to any of the previous claims, wherein the density of holes (S) of the second density portion (D2) is 50 pt/mm² to 400 pt/mm², and the density of holes (S) of the first density portion (D1) is 100 pt/mm² to 500 pt/mm².

4. The electrode (700, 701) according to any of the previous claims, wherein a depth (W3) of the hole (S) of each of the first density portion (D1) and the second density portion (D2) is 5% to 100% of a thickness (T) of the active material layer (71).

5. The electrode (700, 701) according to any of the previous claims, wherein an interval (W2) between the holes (S) of the second density portion (D2) is 50 µm to 145 µm, and an interval (W1) between the holes (S) of the first density portion (D1) is 40 µm to 100 µm.

6. The electrode (700, 701) according to any of the previous claims, wherein a diameter (W4) of a hole (S) of the first density portion (D1) is 20 µm to 70 µm, and a diameter (W5) of a hole (S) of the second density portion (D2) is 20 µm to 70 µm.

7. The electrode (700, 701) according to any of the previous claims, wherein the substrate (70) is composed of copper, and the active material layer (71) is composed of a negative electrode active material.

8. The electrode (700, 701) according to any of the previous claims, wherein an area percent of the first density portion (D1) : an area percent of the second density portion (D2) is 25%:75% to 75%:25%.

9. The electrode (700, 701) according to any of the previous claims, wherein the holes (S) are circular holes (S).

10. The electrode (700, 701) according to any of the previous claims, wherein the holes (S) in the first density portion (D1) are uniformly distributed and/or wherein the holes (S) in the second density portion (D2) are uniformly distributed.

11. The electrode (700, 701) according to any of the previous claims, wherein the holes (S) are distributed in a hexagonal pattern.

12. An electrode assembly (40, 41, 42, 43) comprising:
a negative electrode (20) that comprises the electrode (700, 701) according to any of the previous claims;
a positive electrode (10) that overlaps the negative electrode (20); and
a separator (30) that is arranged between the negative electrode (20) and the positive electrode (10).

13. The electrode assembly (40, 41, 42, 43) according to claim 12, wherein an electrode uncoated portion (DB) of the negative electrode (20) or the positive electrode (10) is arranged adjacent to the second density portion (D2).

14. A rechargeable battery (100, 101, 102, 103) comprising the electrode (700, 701) according to any of claims 1 to 11.

15. A rechargeable battery (100, 101, 102, 103) comprising the electrode assembly (40, 41, 42, 43) according to any of claims 12 or 13.
